# EUROPEAN PATENT APPLICATION

(11) **EP 4 438 932 A1**
(43) Date of publication of application: **02.10.2024**
(21) Application number: 21969358.7
(22) Date of filing: 28.12.2021
(51) Int. Cl.: F16K 31/53

(54) **ELECTRIC CONTROL VALVE AND ACTUATOR THEREOF**

(71) Applicant: Johnson Electric International AG, 3280 Murten (CH)
(72) Inventor: ZUO, Xiaobing, Jiangmen, Guangdong 529000 (CN); LI, Min, Jiangmen, Guangdong 529000 (CN); ZHU, Xiuhua, Jiangmen, Guangdong 529000 (CN)
(74) Representative: Doherty, William
(86) International application number: PCT/CN2021/142165
(87) International publication number: WO 2023/122979

(57) **Abstract**

The invention discloses an electric control valve and its actuator. The actuator includes a motor, a reduction transmission mechanism, a pin shaft and a pin cover. The pin shaft includes a first end and a second end opposite to each other. The first end is in transmission connection with the motor through the reduction transmission mechanism and makes the pin shaft rotate and move linearly simultaneously under the drive of the motor. The second end is rotatably inserted into the pin cover, and the pin cover moves linearly in synchronization with the pin shaft. By using the pin cover to separate the pin shaft from the valve stem, the invention effectively reduces collision and friction caused by relative rotation when the pin shaft directly contacts the valve stem, reduces the generation of noise, improves transmission efficiency and the stability, and makes the movement of the valve stem more accurate.

## Description

### TECHNICAL FIELD

The invention relates to the field of valve technology, particularly to an electric control valve and an actuator thereof.

### BACKGROUND TECHNIQUE

An electric control valve is an indispensable actuator instrument in automation control, which has the advantages of energy saving and environmental protection, quick and convenient installation, etc. Typically, an electric control valve consists of two main parts: an electric actuator and a control valve. The actuator can be a gear motor, etc., it outputs corresponding linear displacement based on control signals, pushes a valve stem of the control valve to move between a closed position and an open position, thereby controlling the opening and closing of a pipeline. However, in existing electric control valves, the actuator's output shaft directly pushes the valve stem to move, there are shortcomings such as low efficiency and high noise, further improvements are needed.

### SUMMARY OF THE INVENTION

In view of this, it is necessary to provide a quiet, efficient actuator and an electric control valve to which it is applied.

The present invention provides an actuator, which includes a motor, a reduction transmission mechanism, a pin shaft and a pin cover, the pin shaft includes a first end and a second end opposite to each other, the first end is in transmission connection with the motor through the reduction transmission mechanism and makes the pin shaft rotate and move linearly simultaneously under the drive of the motor, the second end is rotatably inserted into the pin cover, and the pin cover moves linearly in synchronization with the pin shaft.

Furthermore, the pin cover includes a base plate and a side plate surrounding the base plate, and the second end of the pin shaft is rotatably inserted into a space enclosed by the base plate and the side plate.

Furthermore, the base plate abuts against an end face of the second end of the pin shaft, and a side of the base plate abutting against the pin shaft is provided with an arc surface protruding towards the pin shaft.

Furthermore, the reduction transmission mechanism includes an end cover, the end cover is provided with a through hole at the position aligning with the pin cover, one of a wall surrounding the through hole of the end cover and an outer wall surface of the side plate of the pin cover forms a guide block, and the other defines a guide groove, the guide block is slidingly inserted into the guide groove to guide the pin cover to move linearly within the through hole.

Furthermore, the reduction transmission mechanism further includes a reduction unit and a transmission unit arranged side by side, the reduction unit includes an output gear, and the output end of the output gear forms a ring of first external teeth, the transmission unit includes a transmission member fixedly connected to the first end of the pin shaft and a fixed seat, the transmission member forms a ring of second external teeth, the second external teeth and the first external teeth are meshed, a threaded hole is defined in the fixed seat, and the transmission member is formed with external threads engaging with the threaded hole.

Furthermore, the transmission member includes a first transmission portion and a second transmission portion extending outward from a center of the first transmission portion, the second transmission portion forms the external threads, and the first transmission portion forms the second external teeth.

Furthermore, a center of the first transmission portion is recessed to define a mounting hole, and the first end of the pin shaft is fixedly inserted into the mounting hole.

Furthermore, the reduction unit further includes a gearbox and planetary gears and sun gears arranged in the gearbox, the gearbox and the fixed seat are integrally formed as a single structure, and the end cover covers on the gearbox and the fixed seat and forms a housing of the reduction transmission mechanism together with the gearbox and the fixed seat.

Furthermore, the reduction unit includes at least two stages of planetary gears and sun gears, and a connecting end of the output gear is connected to the final stage planetary gear.

The present invention further provides an electric control valve, which includes a control valve and the actuator according to any one of claims 1-9, the control valve includes a valve seat and a valve stem movably arranged in the valve seat, and the pin cover of the actuator abuts against the valve stem and pushes the valve stem to move between an open position and a closed position.

Compared to the existing technology, the present invention separates the pin shaft from the valve stem via the pin cover, which can effectively reduce the collision and friction caused by relative rotation and the like when the pin shaft directly contacts the valve stem, reduce the generation of noise, improve transmission efficiency and the stability, and make the movement of the valve stem more accurate.

### DESCRIPTION OF THE DRAWINGS

Fig. 1 is a schematic diagram of an actuator of an electric control valve according to an embodiment of the present invention.
Fig. 2 is a schematic diagram of the electric control valve in a first state according to the present invention.
Fig. 3 is a schematic diagram of the electric control valve in a second state according to the present invention.

### DETAILED DESCRIPTION OF THE PREFERRED EMBODIMENTS

To facilitate understanding of the present invention, a more comprehensive description will be provided below with reference to the relevant drawings. The drawings exemplarily illustrate one or more embodiments of the invention, to make the understanding of the technical solution disclosed in the present invention more accurate and thorough. However, it should be understood that the invention can be implemented in various forms and is not limited to the embodiments described below.

In the drawings of the present invention, identical or similar reference numerals correspond to identical or similar components. In the description of the present invention, it should be understood that terms indicating directions or positional relationships such as "up," "down," "left," "right," etc., are based on the orientations or positional relationships shown in the drawings. These terms are used merely for the convenience of describing the present invention and simplifying the description, but are not intended to indicate or imply that the referenced devices or elements must have specific orientations, be constructed or operate in specific orientations. Therefore, the terms describing positional relationships in the drawings are used solely for illustrative purposes and should not be construed as limiting the patent. For those of ordinary skill in the art, the specific meaning of the above terms can be understood on a case-by-case basis.

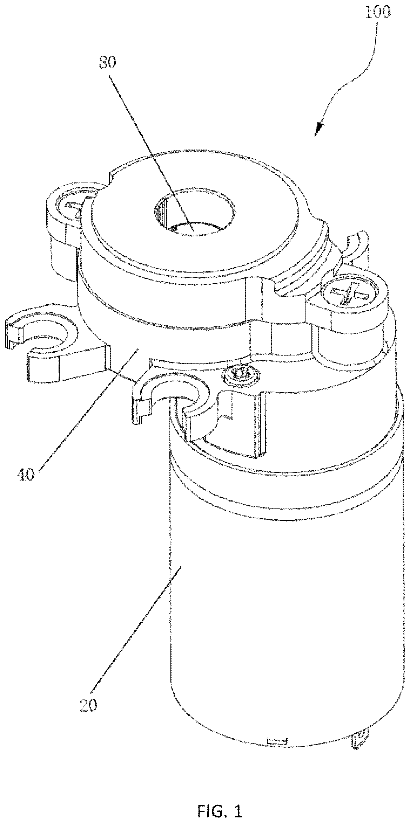

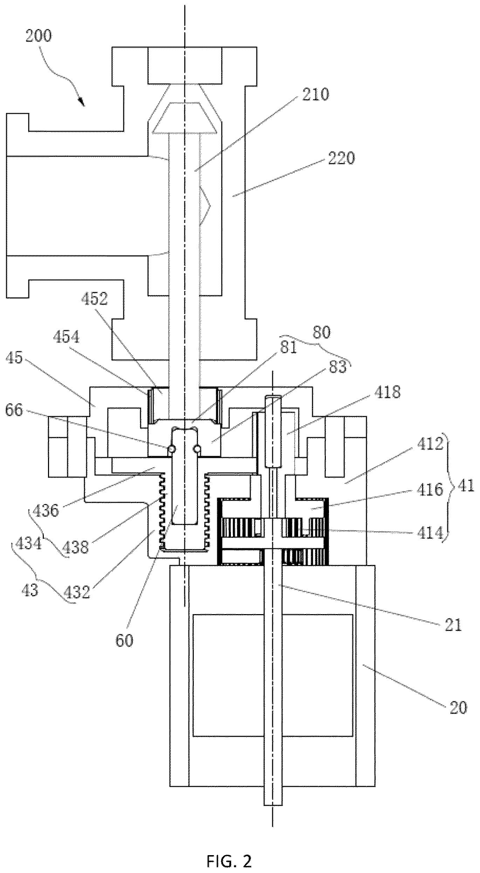

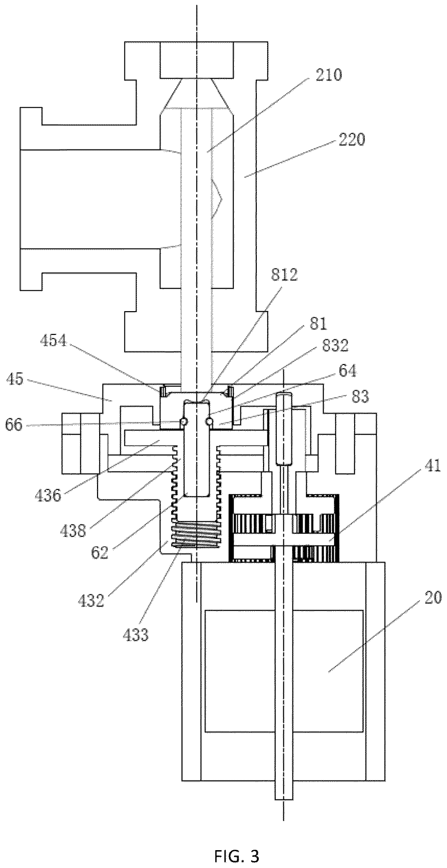

The present invention provides an electric control valve that can be applied to various pipelines, such as water pipelines, refrigerant pipelines, or hot water pipelines in air conditioning systems. As shown in Figs. 1-3, an electric control valve of the present invention includes an actuator 100 and a control valve 200 that cooperates with the actuator 100. The actuator 100 drives a valve stem 210 of the control valve 200 to move between a first position and a second position, thereby controlling the opening and closing of a pipeline. As shown in Fig. 2, when the valve stem 210 moves to the first position, the valve stem 210 is separated from a valve port of a valve seat 220 of the control valve 200, an inlet and an outlet of the valve seat 220 are communicated, the control valve 200 is switched to an open state, and fluid can flow in the pipeline through the regulating valve 200. As shown in Fig. 3, when the valve stem 210 moves to the second position, the valve stem 210 blocks the valve port of the valve seat 220, disconnecting the inlet and outlet of the valve seat 220, the control valve 200 is switched to a closed state.

Please refer to Figs. 1-3 simultaneously, the actuator 100 includes a motor 20, a reduction transmission mechanism 40 connected to the motor 20, a pin shaft 60 and a pin cover 80.

The motor 20 is the power source of the whole actuator 100, can be an existing brushless DC motor or a brushed motor, etc., and its structure will not be elaborated here. A control end of the motor 20 can be connected to a sensor through a controller and the like, and forms an automatic control loop. The sensor can be a pressure or temperature sensor, etc., which is used to detect the pressure of the fluid in the pipeline or the ambient temperature data. The controller generates a corresponding control signal to the motor 20 according to a detection result of the sensor, and the motor 20 starts, stops, adjusts the speed or adjusts rotating direction according to the control signal, thereby adjusting the fluid opening and the flow rate in the pipeline. The motor 20 includes an output shaft 21, and a distal end of the output shaft 21 extends out of a housing of the motor 20 and is connected to the reduction transmission mechanism 40.

The reduction transmission mechanism 40 includes a reduction unit 41 and a transmission unit 43 that are connected in transmission. The reduction unit 41 is connected to the output shaft 21 of the motor 20, to convert a high-speed rotation of the motor 20 into a low-speed rotation. The transmission unit 43 is connected to the pin shaft 60, to convert the low-speed rotation of the reduction unit 41 into a linear movement of the pin shaft 60.

The reduction unit 41 is a planetary gear reduction structure, which includes a gearbox 412 with an internal gear ring, and multi-stage planetary gears 414 and sun gears 416 arranged in the gearbox 412. The first stage of the planetary gears 414 and the output shaft 21 are meshed and driven through the first stage of the sun gears 416, and the final stage of the planetary gears 414 is connected to an output gear 418. When the motor 20 rotates, its output shaft 21 is decelerated by the reduction unit 41, causing the final stage of the planetary gears 414 to rotate at a much lower speed than the motor 20. In this embodiment, the output gear 418 is coaxially arranged with the sun gear 416 and the output shaft 21 of the motor 20. One end of the output gear 418 servers as a connecting end, and the other end serves as an output end. The connecting end is fixedly connected to a shaft of the final stage planet gear 414 and rotates along the internal gear ring at low speed with the final stage planet gear 414. The output end forms a ring of first external teeth for being connected to the transmission unit 43.

The transmission unit 43 is a screw transmission structure, which includes a fixed seat 432 and a transmission member 434 that is screw-connected to the fixed seat 432. The transmission member 434 includes a first transmission portion 436 and a second transmission portion 438. The first transmission portion 436 is disc-shaped and forms a ring of second external teeth engaging with the first external teeth of the output gear 418, so that the output gear 418 can drive the transmission member 434 to rotate. The second transmission portion 438 is a stud with external threads, which extends axially outward from the center of the first transmission portion 436. A threaded hole 433 is defined in the fixed seat 432 for engaging with the second transmission portion 438, so that the transmission member 434 moves linearly along its axial direction while rotating. According to the direction shown in the figures, when the motor 20 rotates in one direction (e.g., clockwise), it drives the transmission member 434 to move upwards along its axial direction; when the motor 20 rotates in the opposite direction (e.g., counterclockwise), it drives the transmission member 434 to move downward along its axial direction. In this embodiment, the threaded hole 433 can store grease, which facilitates the rotation and up-and-down movement of the transmission unit 43.

In this embodiment, the motor 20 is coaxially arranged with the reducer unit 41, and the housing of the motor 20 is fixedly connected to the gearbox 412. The transmission unit 43 is offset to one side of the motor 20 and the reduction unit 41, and is coaxially arranged with the valve stem 210 of the control valve 200. The gearbox 412 of the reduction unit 41 is arranged side by side with the fixed seat 432 of the transmission unit 43, and the transmission member 434 in the fixed seat 432 is parallel to an axis of the planetary gear reduction structure in the gearbox 412. Thereby, the axial dimension of the whole actuator 100 can be reduced. Preferably, the gearbox 412 and the fixed seat 432 are integrally formed, which can simplify the assembly process and effectively avoid the influence of component tolerances or errors during assembly. The gearbox 412 and the fixed seat 432 are covered with an end cover 45, the end cover 45 together with the gearbox 412 and the fixed seat 432 forms a housing of the reduction transmission mechanism 40. The end cover 45 is provided with a through hole 452, the valve stem 210 extends through the through hole 452 and abuts the pin cover 80.

The pin shaft 60 includes a first end 62 and a second end 64 opposite to each other. The first end 62 serves as a transmission end and is fixedly connected to the transmission member 434. The second end 64 serves as a driving end and is connected with to the pin cover 80. In this embodiment, the center of the transmission member 434 defines a mounting hole, and the mounting hole extends axially inward from an outer end side of the first transmission portion 436 to a certain depth. The first end 62 of the pin shaft 60 is fixedly inserted into the mounting hole, allowing the transmission member 434 to drive the pin shaft 60 to move and rotate synchronously with it. The second end 64 of the pin shaft 60 extends out of the mounting hole, and the pin cover 80 covers on the second end 64 and moves with the pin shaft 60.

The pin cover 80 is a cap-like structure as a whole, includes a base plate 81 and an annular side plate 83 extending vertically from an outer edge of the base plate 81. The base plate 81 and the side plate 83 form an assembly space, and the second end 64 of the pin shaft 60 is rotatably inserted into the assembly space through a connecting element 66. An inner side surface 812 (a side facing the pin shaft 60) of the base plate 81 abuts against the second end 64 of the pin shaft 60, and an outer side surface (a side facing away from the pin shaft 60) abuts against the valve stem 210, such that when the pin shaft 60 moves and rotates, the valve stem 210 can be pushed to move synchronously through the pin cover 80, so that the valve stem 210 can switch between the first position and the second position. The size of the base plate 81 of the pin cover 80 is larger than the size of the end face of the valve stem 210, so that the whole end face of the valve stem 210 can contact the base plate 81, the movement of the valve stem 210 is more stable. The outer diameter of the side plate 83 of the pin cover 80 can be slightly smaller than the diameter of the through hole 452, to facilitate the movement of the pin cover 80 within the through hole 452.

The end cover 45 is provided with a guide groove 454 extending axially. The guide groove 454 is defined in a wall surrounding the through hole 452 and is concave outward along the radial direction and is communicated with the through hole 452. An outer wall surface of the side plate 83 of the pin cover 80 protrudes to form a guide block 832. The pin cover 80 is inserted into the through hole 452 of the end cover 45 during assembly, the guide block 832 is slidably inserted into the guide groove 454 of the end cover 45, guiding the movement of the pin cover 80 in the through hole 454 , so that the movement of the pin cover 80 and the valve stem 210 pushed by the pin cover 80 is more stable. The guide block 832 and the guide groove 454 are preferably plurality, and are evenly spaced along the circumferential direction. In addition, the guide block can also be formed by protruding from the wall surrounding the through hole 452 of the end cover 45, and the guide groove is formed correspondingly by recessing the outer wall surface of the side plate 83 of the pin cover 80. This configuration also allows for sliding engagement to guide the movement of the pin cover 80.

Compared to the pin shaft 60 directly pushing the valve stem 210, the present invention separates the pin shaft 60 from the valve stem 210 through the pin cover 80, which can effectively reduce the collision and friction caused by relative rotation when the pin shaft 60 directly contacts the valve stem 210, reduce the generation of noise, improve the transmission efficiency and the stability of the transmission, and make the movement of the valve stem 210 more accurate. Preferably, an inner side surface 812 of the base plate 81 is an outward convex arc surface or a partially outward convex arc surface, so that the end face of the pin shaft 60 forms a point contact with the base plate 81, which effectively reduces friction when the two rotate relatively, and further reduces the generation of noise.

As shown in Fig. 2, when the electric control valve of the present invention is in an open state, the transmission member 434 moves down until its second transmission portion 438 abuts against a bottom surface of the threaded hole 433 of the fixed seat 432. The pin shaft 60 and the pin cover 80 move down with the transmission member 434, and the pin cover 80 is located at a bottom of the through hole 452 of the end cover 45. As shown in Fig. 3, when the electric control valve of the present invention is in a closed state, the transmission member 434 moves up to make its second transmission portion 438 separate from the bottom surface of the threaded hole 433, the pin shaft 60 and the pin cover 80 move up with the transmission part 434 until the pin cover 80 reaches the upper part or the top of the through hole 452 of the end cover 45.

It should be noted that the present invention is not limited to the above-described embodiments. Based on the inventive spirit of the present invention, those skilled in the art can make other modifications. Any such modifications made based on the inventive spirit of the present invention should be included within the scope of protection claimed by this invention.

## Claims

1. An actuator, **characterized in that**, comprises a motor, a reduction transmission mechanism, a pin shaft and a pin cover, the pin shaft comprises a first end and a second end opposite to each other, the first end is in transmission connection with the motor through the reduction transmission mechanism and makes the pin shaft rotate and move linearly simultaneously under the drive of the motor, the second end is rotatably inserted into the pin cover, and the pin cover moves linearly in synchronization with the pin shaft.

2. The actuator according to claim 1, **characterized in that**, the pin cover comprises a base plate and a side plate surrounding the base plate, and the second end of the pin shaft is rotatably inserted into a space enclosed by the base plate and the side plate.

3. The actuator according to claim 2, **characterized in that**, the base plate abuts against an end face of the second end of the pin shaft, and a side of the base plate abutting against the pin shaft is provided with an arc surface protruding towards the pin shaft.

4. The actuator according to claim 2, **characterized in that**, the reduction transmission mechanism comprises an end cover, the end cover is provided with a through hole at the position aligning with the pin cover, one of a wall surrounding the through hole of the end cover and an outer wall surface of the side plate of the pin cover forms a guide block, and the other defines a guide groove, the guide block is slidingly inserted into the guide groove to guide the pin cover to move linearly within the through hole.

5. The actuator according to claim 4, **characterized in that**, the reduction transmission mechanism further comprises a reduction unit and a transmission unit arranged side by side, the reduction unit comprises an output gear, and an output end of the output gear forms a ring of first external teeth, the transmission unit comprises a transmission member fixedly connected to the first end of the pin shaft and a fixed seat, the transmission member forms a ring of second external teeth, the second external teeth and the first external teeth are meshed, a threaded hole is defined in the fixed seat, and the transmission member is formed with external threads engaging with the threaded hole.

6. The actuator according to claim 5, **characterized in that**, the transmission member comprises a first transmission portion and a second transmission portion extending outward from a center of the first transmission portion, the second transmission portion forms the external threads, and the first transmission portion forms the second external teeth.

7. The actuator according to claim 6, **characterized in that**, a center of the first transmission portion is recessed to define a mounting hole, and the first end of the pin shaft is fixedly inserted into the mounting hole.

8. The actuator according to claim 5, **characterized in that**, the reduction unit further comprises a gearbox and planetary gears and sun gears arranged in the gearbox, the gearbox and the fixed seat are integrally formed as a single structure, and the end cover covers on the gearbox and the fixed seat and forms a housing of the reduction transmission mechanism together with the gearbox and the fixed seat.

9. The actuator according to claim 8, **characterized in that**, the reduction unit comprises at least two stages of planetary gears and sun gears, and a connecting end of the output gear is connected to the final stage planetary gear.

10. An electric control valve, **characterized in that**, comprises a control valve and the actuator according to any one of claims 1-9, the control valve comprises a valve seat and a valve stem movably arranged in the valve seat, and the pin cover of the actuator abuts against the valve stem and pushes the valve stem to move between an open position and a closed position.
